# EUROPEAN PATENT APPLICATION

(11) **EP 2 496 045 A2**
(43) Date of publication of application: **05.09.2012**
(21) Application number: 11173943.9
(22) Date of filing: 14.07.2011
(51) Int. Cl.: H04W 84/00

(54) **Method of providing a vehicle with communication service and micro base station applied to vehicle**

(30) Priority: 04.03.2011 TW 100107274
(71) Applicant: Askey Computer Corp., New Taipei City 235 (TW)
(72) Inventor: Hung, Kuo-Wei, 807 Kaohsiung City (TW); Lin, Cheng-Kuei, 116 Taipei City (TW); Hsieh, Ching-Feng, 108 Taipei City (TW)
(74) Representative: Bonvicini, Davide

(57) **Abstract**

A method of providing services to a vehicle and a micro base station applicable to a vehicle. The micro base station is disposed on the vehicle and is connected to the core network and the mobile communication device, either with different or the same wireless communication techniques. The mobile communication device is then enabled to communicate with the core network according to a connection relation between the first wireless communication technique and the core network. With the micro base station and the method of providing services to the vehicle, chances of performing a handshaking process between the communication device installed on the vehicle and the core network base station are greatly reduced, and the stability of signals received by the mobile communication device is highly improved. Therefore, the communication quality between the mobile communication device and the core network is enhanced.

## Description

### FIELD OF THE INVENTION

This invention relates to a micro base station applicable in a wireless communication field and a method of the same, and, more particularly, to a method of providing communication services to vehicles and a micro base station applicable to vehicles.

### BACKGROUND OF THE INVENTION

In the development history of modem network communication, overall network coverage is always a key point that the network industry must take into account when designing a network system. Nowadays, the overall coverage of a wide area network has been rather complete. For instance, a macro cell base station with a greater coverage area is commonly applicable to a less populated area in which users move fast. Even in a rather rural area, a basic wide area network can serve its basic purpose without questions.

However, in a densely populated city, with more and more skyscrapers and increasing usages of mobile communication inside these buildings, indoor territory has been always an area that the macro cell base station provides a weaker network coverage. Therefore, the communication industry has produced a base station named Femtocell to deal with the situation. As implied by the name, the Femtocell is capable of extending the network coverage of the macro cell base station, and thus efficiently settling the situation of weaker overall network coverage in the indoor territory.

Nevertheless, the comparatively weak overall network coverage in the indoor territory is not the only problem that the macro cell base station encounters. Since the micro cell base station needs high-speed optical fiber network as medium to connect with a core network, it cannot be disposed on a moving vehicle. In addition, mobile communication devices installed on high-speed moving vehicles suffer from system overload and unstable communication quality.

As commonly known, a mobile communication device (such as a mobile phone or a PDA) is performing switches among macro cell base stations practically by handshaking or handover. In other words, when a vehicle is moving at high speed, the mobile communication device used inside or disposed on the vehicle has to perform a handshaking procedure frequently. Such frequent handshaking procedures will make call receiving or data transmission quality of the mobile communication device become rather unstable, and each macro cell base station has to perform a huge number of handshaking processes.

Although the Femtocell base station is capable of further extending the network coverage of the macro cell base station, the Femtocell presently developed can be disposed on a fixed location or building only. In other words, the Femtocell must be connected to a core network via a fixed line, such as an optical fiber, ADSL, Cable, etc., thereby incapable of providing ultimate solution to the network coverage of a mobile communication device installed on a vehicle that moves at a high speed.

Hence, it is a highly urgent technique issue in the industry to provide a micro base station applicable to high-speed vehicles, in order for passengers stayed in the vehicle may use a mobile communication device installed in the vehicles to wirelessly communicate with macro cell base stations or core networks stably, thereby avoiding the drawbacks of the conventional micro base station.

### SUMMARY OF THE INVENTION

In view of the drawbacks of the prior art mentioned above, the present invention provides a method of providing communication services to a vehicle and a micro base station applicable to the vehicle, thereby providing communication services between a mobile communication device and a core network.

The present invention provides a method of providing communication services to a vehicle, which is applicable to establish a communication channel between a mobile communication device installed on the vehicle and a core network outside the vehicle, the method comprising the following steps of: disposing on the vehicle a micro base station that supports a first wireless communication technique and a second wireless communication technique; connecting the core network to the micro base station with the first wireless communication technique, and connecting the mobile communication device to the micro base station with the second wireless communication technique; and enabling the mobile communication device to communicate with the core network according to a connection relation between the micro base station and the core network established by the first wireless communication technique.

The present invention further provides a micro base station installable on a vehicle, which is applicable to provide a mobile communication channel between a mobile communication device installed on the vehicle and a core network outside the vehicle, the micro base station comprising: a first wireless communication module connectible with the core network; a second wireless communication module; and a radio network controller that controls the second wireless communication module to be connected with the mobile communication device, and enables the mobile communication device to communicate with the core network according to a connection relation between the first wireless communication module and the core network.

Compared with the prior arts, the present invention not only decreases the handshaking frequency happened between the mobile communication device installed on the vehicle and the core network base station, e.g. a macro base station, but also improves the stability of signals received by the mobile communication device, thereby enhancing communication quality between the mobile communication device and the core network.

### BRIEF DESCRIPTION OF THE DRAWINGS

The invention can be more fully understood by reading the following description of the preferred embodiments, with reference made to the accompanying drawings, wherein:
FIG 1 is an applied schematic diagram showing a micro base station applicable to vehicles according to the present invention;
FIG 2 is a schematic block diagram illustrating the micro base station of FIG 1; and
FIG 3 is a flow chart depicting a method of providing communication services to vehicles according to the present invention.

### DETAILED DESCRIPTION OF THE PREFERRED EMBODIMENTS

The following illustrative embodiments are provided to illustrate the disclosure of the present invention; those in the art can apparently understand these and other advantages and effects after reading the disclosure of this specification. The present invention can also be performed or applied by other different embodiments. The details of the specification may be on the basis of different points and applications, and numerous modifications and variations can be devised without departing from the spirit of the present invention.

The present invention provides a micro base station applicable to a vehicle and a method of providing communication services to a vehicle. The micro base station and the method are applicable to a moving vehicle, and overcome problems of the prior art, such as, bad quality of signal receiving or data transmission of a mobile communication device used inside or disposed on a high-speed moving vehicle, macro cell base stations having to perform a handshaking procedure frequently, etc.

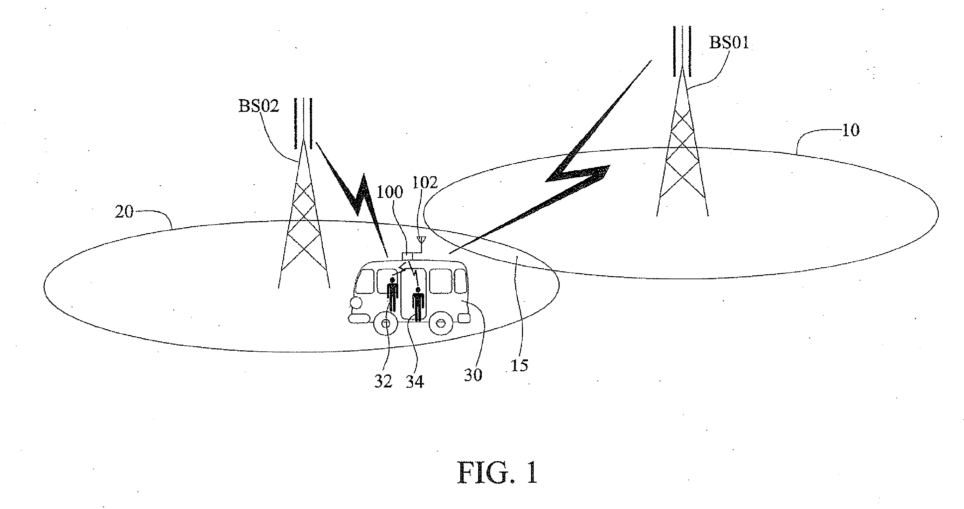

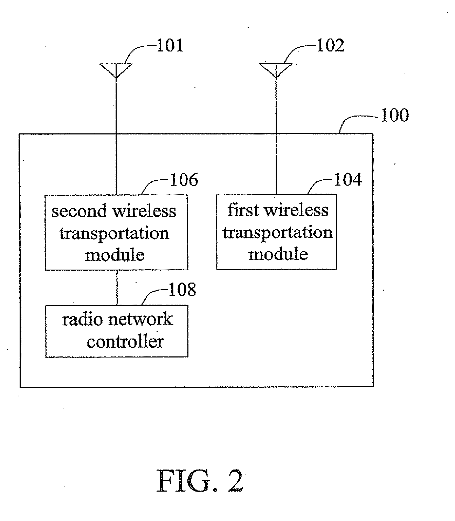

Please refer to FIGs. 1 and 2. FIG 1 is an applied schematic diagram showing a micro base station of the present invention applicable to a vehicle. FIG 2 is a schematic block diagram illustrating the micro base station of FIG 1. A micro base station 100 is disposed on a vehicle 30, and the vehicle 30 is moving within communication coverage areas 10 and 20 covered by macro cell base stations BS01 and BS02, respectively. The micro base station 100 comprises a first antenna 101, a second antenna 102, a first wireless communication module 104, a second wireless communication module 106, and a radio network controller (RNC) 108. The micro base station 100 enables a passenger inside the moving vehicle 30 to acquire communication services of good quality via the passenger' mobile communication device. Note that the vehicle 30 is not limited to a bus as depicted in FIG 1. Any vehicle for carrying human or non-human, such as a train, automobile, high-speed train, cargo, ship, airplane, any flight vehicle, etc. falls within the scope of the present invention. Furthermore, the mobile communication device may be a notebook, PDA, mobile phone, etc.

The micro base station 100 may be regarded as a base station subsystem (BSS) in a mobile communication service system. The radio network controller 108 provides radio network communication functions, such as mobility management, call processing, link management, switch, bridge, etc., to accomplish the foresaid functions. The radio network controller 108 controls the first wireless communication module 104 to connect to a core network via the second antenna 102, and the second wireless communication module 106 to connect to an access network via the first antenna 101. Take FIG 1 as an example, the core network is the communication coverage area covered by the macro cell base stations BS01 and BS02, and the access network is the mobile communication device on the vehicle 30.

The second wireless communication module 106 may be served as a base transceiver station (BTS), for providing a communication interface to connect with the mobile communication device of the access network. More specifically, the second wireless communication module 106 is, for instance, Node B in a 3G mobile communication system, which has capabilities including spread spectrum, modulation, channel code, etc. The second wireless communication module 106 may be connected to the radio network controller 108 via an IUB interface. As shown in FIG 1, a certain degree of communication coverage overlapped area 15 exists between the communication coverage areas 10 and 20, such that the mobile communication device means, while passing through the communication coverage overlapped area 15, are immune from communication breaking down. Based on the foresaid features, when a mobile communication device is passing through the communication coverage overlapped area 15, the macro cell base stations BS01 and BS02 have to perform handshaking with the mobile communication device individually, and the mobile communication device must perform the handshaking procedure accordingly. As a result, situations of brief weak signal or bad data transmission quality or even probably communication breakdown are likely unavoidable.

The micro base station 100 of the present invention is applicable to a vehicle, and may thus solve the problem of unstable quality or communication breakdown due to frequent handshaking or handover performed between mobile communication device used by a passenger inside the vehicle and the macro cell base stations BS01 and BS02.

The micro base station 100 connects to the core network or the macro cell base stations BS01 and BS02 of the core network via the first wireless communication module 104. Therefore, the micro base station 100 receives wireless communication signals sent from the core network or the macro cell base stations BS01 and BS02 of the core network without breaking down while the vehicle 30 is moving.

In another situation, if the vehicle 30 carries multiple passengers 32 and 34, and the passengers 32 and 34 probably use respective mobile communication devices, the micro base station 100 controls the second wireless communication module 106 to connect with the mobile communication devices inside the vehicle 30 via the radio network controller 108, and enables the mobile communication devices to communicate with the core network according to a connection relation between the first wireless communication module 104 and the core network. The first wireless communication module 104 and the second wireless communication module 106 apply various wireless communication techniques, such as GSM, GPRS, WCDMA, WiMAX, LTE, or the like, as a basis, and connect with the core network and mobile communication devices used by the passengers 32 and 34, respectively. Furthermore, the first wireless communication module 104 may also use satellite as a basis for connecting with the core network.

In view of the above, the micro base station 100 disposed on the vehicle 30 efficiently serves as a communication bridge between the macro cell base stations BS01 and BS02 (or namely external core network) and mobile communication devices used by passengers 32 and 34, and then establishes a communication connection between the core network (or the micro cell base stations BS01 and BS02) and the mobile communication devices through calling, receiving, or other corresponding relation between both.

Accordingly, the micro base station 100 applicable to the vehicle 30 disclosed by the present invention provides communication industry with distinct improvement on mobile communication quality between mobile communication devices on the vehicle 30 and the core network outside the vehicle 30 or macro cell base stations BS01 and BS02. In other words, the micro base station 100 disclosed by the present invention, which applies various wireless communication techniques, such as GPRS, satellite, GSM, WCDMA, WiMAX, LTE, or the like, as a basis, provides a wireless communication channel of stable and strong signals to mobile communication devices on the vehicle 30, thereby enabling the mobile communication device to maintain high quality connection and data transmission with the core network or the macro cell base station BS01 and BS02 even when the vehicle 30 is running at a high speed.

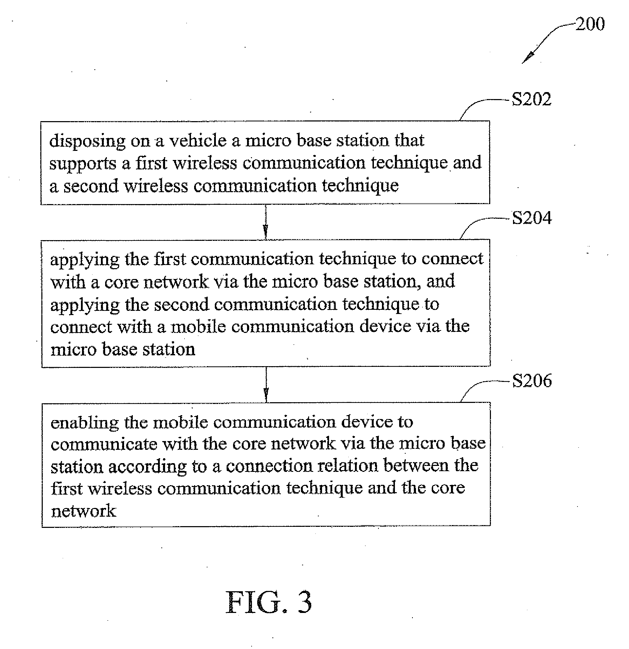

The foresaid applied scheme of FIG 1 illustrates the communication service method on a vehicle provided by the micro base station of the present invention. FIG 3 is a flow chart depicting the method of the present invention providing communication services to a vehicle.

First, in step S202, a micro base station that supports a first wireless communication technique and a second wireless communication technique is disposed on a vehicle. In a preferred embodiment of the present invention, the first wireless communication technique may be the same as or different from the second wireless communication technique, depending on user demands and communication industry specification.

In step 204, the first wireless communication technique is applied to connect with a core network via the micro base station, and the second wireless communication technique is applied to connect with a mobile communication device via the micro base station. Proceed to step 206.

In step 206, the mobile communication device is enabled to communicate with the core network via the micro base station according to a connection relation between the first wireless communication technique and the core network, thereby enabling a passenger on the moving vehicle to obtain communication services via his/her mobile communication device at will.

In view of the above, the micro base station of the present invention applicable to a vehicle provides a communication service method, which, in addition to providing an efficient mechanism of stable wireless communication signals, cuts down from the core network or macro cell base stations the complicated and massive load of handshaking or handover procedures with each individual mobile communication device, and further decreasing cost of network equipment, therefore, disadvantages such as excessive handshaking procedure, bad quality of data transmission, etc. While using mobile communication device on vehicle can be dramatically overcome, practically avoiding problem of excessive handshaking procedure between mobile communication device and core network happened in the prior art.

The foregoing descriptions of the detailed embodiments are only illustrated to disclose the features and functions of the present invention and are not interpreted as limiting the scope of the present invention. It should be understood to those in the art that all modifications and variation according to the spirit and principle of the disclosure of the present invention should fall within the scope of the appended claims.

## Claims

1. A method of providing communication services to a vehicle, which is applicable to establish a communication channel between a mobile communication device installed on the vehicle and a core network outside the vehicle, the method comprising the following steps of:
disposing on the vehicle a micro base station that supports a first wireless communication technique and a second wireless communication technique;
connecting the core network to the micro base station with the first wireless communication technique, and connecting the mobile communication device to the micro base station with the second wireless communication technique; and
enabling the mobile communication device to communicate with the core network according to a connection relation between the micro base station and the core network established by the first wireless communication technique.

2. The method of claim 1, wherein the vehicle is a car, a flight vehicle, or a boat.

3. The method of claim 1, wherein the first wireless communication technique uses GPRS, satellite, GSM, WCDMA, WiMAX, or LTE as a basis to connect the micro base station with the core network.

4. The method of claim 1, wherein the mobile communication device is a PDA, notebook computer, or mobile phone.

5. The method of claim 1, wherein the second wireless communication technique uses GPRS, satellite, GSM, WCDMA, WiMAX, or LTE as a basis to connect the micro base station with the mobile communication device.

6. A micro base station installable on a vehicle, which is applicable to provide a mobile communication channel between a mobile communication device installed on the vehicle and a core network outside the vehicle, the micro base station comprising:
a first wireless communication module connectible with the core network;
a second wireless communication module; and
a radio network controller that controls the second wireless communication module to be connected with the mobile communication device, and enables the mobile communication device to communicate with the core network according to a connection relation between the first wireless communication module and the core network.

7. The micro base station of claim 6, wherein the vehicle is a car, a flight vehicle, or a boat.

8. The micro base station of claim 6, wherein the first wireless communication technique uses GPRS, satellite, GSM, WCDMA, WiMAX, or LTE as a basis to connect with the core network.

9. The micro base station of claim 6, wherein the mobile communication device is a PDA, notebook computer, or mobile phone.

10. The micro base station of claim 6, wherein the second wireless communication technique uses GPRS, satellite, GSM, WCDMA, WiMAX, or LTE as a basis to connect with the mobile communication device.
